(19) Europäisches Patentamt
European Patent Office
Office européen des brevets

(11) **EP 3 100 080 B1**

(12) **EUROPEAN PATENT SPECIFICATION**

(45) Date of publication and mention
of the grant of the patent:
**08.03.2023 Bulletin 2023/10**

(51) International Patent Classification (IPC):
**G02B 3/14** *(2006.01)*    **G02B 26/06** *(2006.01)*
**G02C 7/08** *(2006.01)*

(21) Application number: **15708293.4**

(22) Date of filing: **27.01.2015**

(52) Cooperative Patent Classification (CPC):
**G02C 7/085; G02B 3/14; G02B 26/06**

(86) International application number:
**PCT/IB2015/050609**

(87) International publication number:
**WO 2015/114515 (06.08.2015 Gazette 2015/31)**

(54) **DEFORMABLE LENS STRUCTURE FOR ADAPTIVE OPTICS DEVICES**

VERFORMBARE LINSENSTRUKTUR FÜR ADAPTIVE OPTISCHE VORRICHTUNGEN

STRUCTURE DE LENTILLE DÉFORMABLE POUR DES DISPOSITIFS D'OPTIQUE ADAPTATIVE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **28.01.2014 IT TV20140014**

(43) Date of publication of application:
**07.12.2016 Bulletin 2016/49**

(73) Proprietor: **Adaptica S.r.l.**
**35129 Padova (IT)**

(72) Inventor: **BONORA, Stefano**
**46047 Porto Mantovano (MN) (IT)**

(74) Representative: **Gallo, Luca et al**
**Gallo & Partners S.r.l.**
**Via Rezzonico, 6**
**35131 Padova (IT)**

(56) References cited:
**EP-A1- 2 199 836        EP-A1- 2 447 742
US-A1- 2010 208 357    US-A1- 2012 170 134**

**Description**

The present invention relates to the technical field of adaptive optics devices.

In particular, the present invention relates to a deformable lens structure that can be used in an adaptive optics device to dynamically transform the wavefront of a light beam.

It is widely known that the performance of an optical system, through which a light beam passes, is greatly influenced by the presence of optical aberrations (such as defocus, astigmatism, coma, spherical aberration, etc.) in the wavefront of the aforesaid light beam. For this reason, in various types of optical systems (for example, in the field of astronomy, medicine, microscopy or telecommunications) it is known to incorporate adaptive optics devices dedicated to controlling the wavefront of light beams.

Some adaptive optics devices of known type comprise lenses having shaped surfaces or layers of material with a certain gradient of the refractive index.

Other adaptive optics devices of known type comprise deformable lenses. These latter devices are generally capable of effectively correcting defocus aberration. In general, however, they are not very suitable for use in high performance optical systems, for example in optical systems for laser scanning, medical, microscopy devices and the like.

The main aim of the present invention is to provide a deformable lens structure for adaptive optics devices that enables the problems of the prior art to be resolved.

Within the scope of this aim, an object of the present invention is to provide a lens structure that enables the optical aberrations of a light beam, even of a high order, to be effectively corrected.

A further object of the present invention is to provide a deformable lens structure that is easy to incorporate in an adaptive optics device or in an optical system.

A further object of the present invention is to provide a deformable lens structure that is easy to produce on an industrial scale, at competitive costs.

This aim and these objects, as well as other objects that will be apparent from the description below and from the accompanying drawings, are achieved, according to the invention, by a lens structure according to claim 1, proposed below.

In another aspect, the present invention relates to an adaptive optics device comprising the lens structure according to the invention.

In a further aspect thereof, the present invention relates to an optical system comprising the lens structure according to the invention.

Further characteristics and advantages of the lens structure according to the invention will be more apparent with reference to the description given below and to the accompanying figures, provided purely for explanatory and non-limiting purposes, wherein:

- Figs. 1-3 schematically show the lens structure according to the invention in an embodiment thereof;
- Fig. 4 schematically shows a further embodiment of the lens structure according to the invention;
- Fig. 5 schematically shows a further embodiment of the lens structure according to the invention;
- Figs. 6A-6B schematically show examples of actuators used in the lens structure according to the invention; and
- Figs. 7-9 schematically show the operation of the lens structure according to the invention.

With reference to the aforesaid figures, the present invention refers to a deformable lens structure 1 for adaptive optics devices.

The lens structure 1 is provided with an optical axis 100 along which, in the use of said lens structure, an incident light beam L is transmitted.

The lens structure 1 comprises a first layer 2 and a second layer 3, structurally rigid.

Within the scope of the present invention:

- the definition "rigid" referred to a layer, element or portion of material, means that this layer, element or portion of material offers a resistance to mechanical deformation comparable with the forces applied in normal operation of the lens structure 1 (for example due to the actuators of this lens structure);
- the definition "flexible" referred to a layer, element or portion of material, means that this layer, element or portion of material offers a very low resistance to mechanical deformation in relation to the forces applied during normal operation of the lens structure 1 (for example due to the actuators of this lens structure).

A layer, element or portion of structurally rigid or flexible material is, in general, deformable in response to an applied force.

Naturally, the mechanical deformation undergone by a structurally rigid layer, element or portion of material will be much lower with respect to that undergone by a structurally flexible layer, element or portion of material, with the same applied force.

Within the scope of the present invention, the definition "reversibly deformable" referred to a layer, element or portion of material, means that, in normal operation of the lens structure 1, this layer, element or portion of material (for example the layers 2-3) is capable of returning to its original shape and volume at rest, after having undergone a mechanical deformation in response to an applied force (for example generated by actuators).

The layers 2-3 are reversibly deformable in response to an applied force, for example by actuators of the lens structure 1.

The lens structure 1 comprises a spacer element 4 integrally connected to the first and second layer 2-3 so as to maintain the layer 3 positioned spaced with respect to the layer 2. Preferably, the layer 2 has substantially planar geometry and, in conditions at rest, is arranged perpendicularly with respect to the optical axis 100.

However, it could also have spherical or aspherical geometry.

Preferably, the layer 2 is formed by glass or plastic material and has a thickness between 10 $\mu$m and 1 mm.

With reference to the optical axis 100, the layer 2 comprises a first central portion 20, a first outer portion 25 and a first intermediate portion 26.

The first central portion 20 is transparent to the light beam L and defines the optical aperture W of the lens structure 1 at the layer 2.

Preferably, it is formed by a section (for example in the shape of a cylinder) of the layer 2 passing through the whole of the thickness thereof and centred with respect to the optical axis 100.

The first outer portion 25 is the region at which the layer 2 is integrally connected to the spacer element 4.

Preferably, the first outer portion 25 is formed by a section (for example in the shape of a cylindrical crown) of the layer 2 passing through the whole of the thickness thereof, centred with respect to the optical axis 100 and positioned externally with respect to the first central portion 20.

With reference to the optical axis 100, the first intermediate portion 26 is the region positioned between the first central portion 20 and the first outer portion 25.

Preferably, it is formed by a section (for example in the shape of a cylindrical crown) of the layer 2 passing through the whole of the thickness thereof, centred with respect to the optical axis 100 and positioned between the first central portion 20 and the first outer portion 25.

Also the first outer portion 25 and/or the first intermediate portion 26 can be transparent to the light beam L.

The layer 2 forms an optical element, integrally connected to the spacer element 4 and, in conditions at rest, arranged along a reference plane substantially perpendicular with respect to the optical axis 100.

Although structurally rigid, the layer 2 is deformable by a bending moment F applied according to a direction substantially parallel to the optical axis 100 (with a positive or negative direction).

The layer 2 is provided with a first outer surface 21 and with a first inner surface 22, opposite the surface 21.

Preferably, the layer 3 has substantially planar geometry and, in conditions at rest, is arranged perpendicularly with respect to the optical axis 100.

However, it could also have spherical or aspherical geometry.

Preferably, the layer 3 is formed by glass or plastic material and has a thickness between 10 $\mu$m and 1 mm.

With reference to the optical axis 100, the layer 3 comprises a second central portion 30, a second outer portion 35 and a second intermediate portion 36.

The second central portion 30 is transparent to the light beam L and defines the optical aperture W of the lens structure 1 at the layer 3.

Preferably, it is formed by a section (for example in the shape of a cylinder) of the layer 3 passing through the whole of the thickness thereof and centred with respect to the optical axis 100.

The second outer portion 35 is the region at which the layer 3 is integrally connected to the spacer element 4.

Preferably, the second outer portion 35 is formed by a section (for example in the shape of a cylindrical crown) of the layer 3 passing through the whole of the thickness thereof, centred with respect to the optical axis 100 and positioned externally with respect to the second central portion 30.

With reference to the optical axis 100, the second intermediate portion 36 is the region positioned between the second central portion 30 and the second outer portion 35.

Preferably, it is formed by a section (for example in the shape of a cylindrical crown) of the layer 3 passing through the whole of the thickness thereof, centred with respect to the optical axis 100 and positioned between the second central portion 30 and the second outer portion 35.

Also the second outer portion 35 and/or the second intermediate portion 36 can be transparent to the light beam L.

The layer 3 forms a further optical element, integrally connected to the spacer element 4 and, in conditions at rest, arranged along a reference plane substantially perpendicular with respect to the optical axis 100.

The layer 3, although structurally rigid, is also deformable by a bending moment F applied according to a direction substantially parallel to the optical axis 100 (with positive or negative direction).

The layer 3 is provided with a second inner surface 31 and with a second outer surface 32, opposite the surface 31.

In the lens structure 1, the spacer element 4 is positioned between the first inner surface 22 of the first layer 2 and the second inner surface 31 of the second layer 3, so as to form a support adapted to maintain the layers 2-3 mutually separated.

The spacer element 4 is integrally connected to the layers 2-3 at the outside of the central portions 20-30 thereof, in particular at the first and second outer portion 25-35.

Preferably, the spacer element 4 (for example in the shape of a ring) is located perimetrically with respect to the layers 2-3 and defines, at least partially, the lateral wall of the lens structure 1.

According to other embodiments of the invention, it could however be located in a different position, for example at the portions 25-26, 35-36 of the layers 2-3.

The spacer element 4 can comprise one or more substrates and/or films and/or regions of material, for example, glass, polymer material, metal, composite material or the like. Preferably, the spacer element 4 is electrically insulating and has a thickness between 100 μm and 5 mm.

According to the invention, the spacer element 4 comprises at least a first flexible portion 41, at which the layer 2 is integrally connected to the spacer element.

The first portion 41 is reversibly deformable in response to an applied force.

The lens structure 1 comprises an inner chamber 5, which, as shown in the aforesaid figures, is at least partially defined by the spacer element 4 and by the layers 2-3.

In particular, with reference to the substantially vertical orientation of the optical axis 100, shown in the aforesaid figures figure, the layers 2-3 at least partially define the upper and lower wall (both deformable) of the inner chamber 5, respectively, while the spacer element 4 defines the lateral walls thereof.

The chamber 5 contains a liquid 6, transparent to the light beam L.

The transparent liquid 6 occupies the whole volume of the inner chamber 5, so as to be in contact with the first and second layer 2-3, respectively at the surfaces 22-31 thereof.

The transparent liquid 6 can consist of oil, such as vaseline oil or cedar oil, liquid paraffin, propylene carbonate, water or the like.

Preferably, the transparent liquid 6 is electrically insulating.

From the above, it is evident that, in the lens structure 1, the light beam L is capable of passing through the lens structure 1 at an optical aperture W defined by the first central portion 20 of the layer 2 and by the second central portion 30 of the layer 3.

Preferably, the materials of the first and second central portion 20-30 of the first and second layer 2-3 and the transparent liquid 6 have homogeneous refractive indices.

Within the scope of the present invention, a material M1 (solid or liquid) is intended to have a refractive index that is "homogeneous" with the refractive index of a material M2 (solid or liquid), when the following relation occurs:

$$\left( \frac{R_{M1} - R_{M2}}{R_{M1}} \right) < 5\%$$

where RM1 and RM2 are the refractive indices of the materials M1, M2.

From an optical viewpoint, the lens structure 1 thus has a thickness without appreciable discontinuous surfaces at the optical aperture W through which the light beam L passes.

In this way, reflections are prevented or reduced at surfaces within the lens.

According to the invention, the lens structure 1 comprises one or more first actuators (indicated collectively by the reference 111), integrally connected to the layer 2.

The actuators 111 can be of piezoelectric, electrostrictive or bimetallic type.

The actuators 111 are adapted to cause a reversible deformation of the layer 2.

The actuators 111 are positioned outside the first central portion 20, i.e. at a portion of the layer 2 different from the first central portion 20 (for example the first outer portion 25 and/or the first intermediate portion 26).

In other words, the actuators 111 are positioned outside the optical aperture W.

Each of the first actuators 111 can be activated by a corresponding first applied actuation voltage.

The first actuation voltages (indicated collectively by the reference $V_A$) are selectively adjustable.

Within the scope of the present invention, an actuation voltage is intended as "selectively adjustable" if it can be controlled so as to assume any desired value, even independently of the values assumed by other actuation voltages.

Preferably, the first actuators 111 are positioned at the surface 21, but could also be positioned at the surface 22.

In principle, the first actuators 111 can have any number and shape, according to needs.

Preferably, they have a shape of the type with a circular sector or pad and are arranged along a closed path, for example a circumference.

Preferably, the lens structure 1 comprises at least eight first actuators 111.

Preferably, the actuators 111 are electrically connected to an electronic control device 80 capable of generating and adjusting the first control voltages $V_A$.

The control device 80 can be included in the lens structure 1 or, preferably, in the adaptive optics device or optical system in which the lens structure 1 is incorporated. It can advantageously comprise at least one microprocessor unit.

Advantageously, the actuators 111 are electrically connected with corresponding drive channels of the control device 80.

In this way, each actuator 111 is capable of receiving from the control device 80 a corresponding actuation voltage $V_A$, selectively adjustable.

To connect the actuators 111 with the control device 80, the lens structure 1 can comprise suitable conductive tracks that connect the actuators with corresponding external electric contacts, in turn electrically connected with the control device 80.

According to the invention, the lens structure 1 comprises one or more second actuators (indicated collectively by the reference 121) integrally connected to the layer 3.

Also the second actuators 121 can be of piezoelectric, electrostrictive or bimetallic type.

The actuators 121 are adapted to cause a reversible deformation of the layer 3.

The actuators 121 are positioned outside the second central portion 30, i.e. at a portion of the layer 3 different from the second central portion 30 (for example the second outer portion 35 and/or the second intermediate portion 36).

In other words, the actuators 121 are positioned outside the optical aperture W.

Each of the second actuators 121 can be activated by a corresponding second applied actuation voltage.

Also the second actuation voltages (indicated collectively by the reference $V_B$) are selectively adjustable.

Preferably, the second actuators 121 are positioned at the surface 32 of the layer 3 but could also be positioned at the surface 31.

In principle, the second actuators 121 can have any number and shape, according to needs. Preferably, they have a shape of the type with a circular sector or pad and are arranged along a closed path, for example a circumference.

Preferably, the lens structure 1 comprises at least eight second actuators 121.

Preferably, also the second actuators 121 are electrically connected to the electronic control device 80 capable of generating and adjusting the second actuation voltages $V_B$.

Advantageously, the actuators 121 are electrically connected with corresponding drive channels of the control device 80 to receive from the control device 80 a corresponding actuation voltage $V_B$, selectively adjustable.

To connect the actuators 121 with the control device 80, the lens structure 1 can comprise suitable conductive tracks that connect the actuators with corresponding external electric contacts, in turn electrically connected with the control device 80.

The actuators 111-121 can be produced by depositing one or more layers of material on the surfaces of the layers 2-3, for example using gluing or screen printing procedures. Piezoelectric actuators can be produced using lead, zirconium and titanium (PZT) alloys, piezoelectric polymers (Polyvinyl Fluoride) and the like.

Electrostrictive actuators can be produced using lead magnesium niobate (PMN) alloys and the like.

Bimetallic actuators can be produced using iron-nickel alloys and the like (having different thermal expansion coefficients).

Preferably, in order to ensure adequate electric insulation between the actuators 111-121, the relevant conductive tracks and the corresponding electric contacts, the layers 2-3 are at least partially electrically insulating.

The actuators 111-121, the relevant conductive tracks and the corresponding electric contacts can be covered by a substrate (thin film) of electrically insulating material. This solution is particularly useful in the embodiments of the invention in which the actuators 111-121 are positioned at the inner surfaces 22-31 of the layers 2-3 and the transparent liquid 6 does not ensure adequate electric insulation.

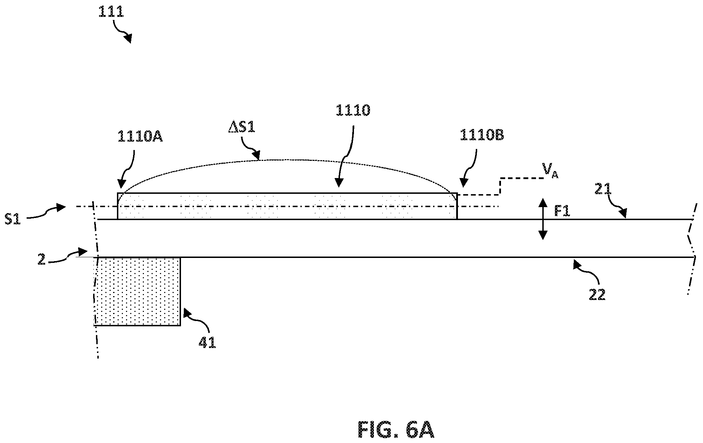

According to the invention, each of the actuators 111 comprises at least a first active portion 1110 integrally connected with the layer 2 (Fig. 6A).

The active portion 1110 is reversibly deformable in response to a corresponding first applied actuation voltage $V_A$.

Preferably, the active portion 1110 is directly in contact with the surface 21 or 22 of the layer 2 so as to form a structure of dimorph type.

When an actuation voltage $V_A$ is applied, the active portion 1110 undergoes a reversible structural deformation $\Delta S1$ that extends along a preferential deformation direction S1, substantially parallel to the layer 2, in particular to the surfaces 21 or 22 of this latter. As the active portion 1110 is integrally connected to the layer 2, this latter is subject to a force F1 (in particular a bending moment) that causes a reversible deformation thereof. Along the preferential deformation direction S1, the active portion 1110 comprises the ends 1110A, 1110B.

Although integrally connected with the layer 2, the actuators 111 are free from fixed constraints with rigid structures, given that the layer 2 is integrally connected to the flexible portion 41 of the spacer element 4.

In this way, the active portion 1110 of the actuators 111 is free to deform at both ends 1110A, 1110B.

For example, it can bend and assume a U-shape (concave or convex as a function of the sign of the first applied actuation voltage $V_A$).

The solution illustrated above is particularly advantageous given that the actuators 111, even if positioned at a portion of the layer 2 different from the first central portion 20, are capable of deforming this latter according to a profile having a monotonic trend.

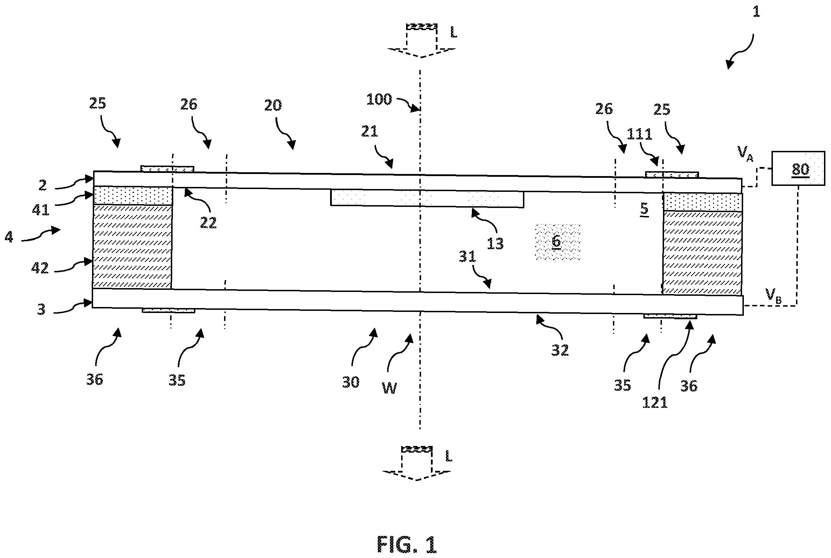

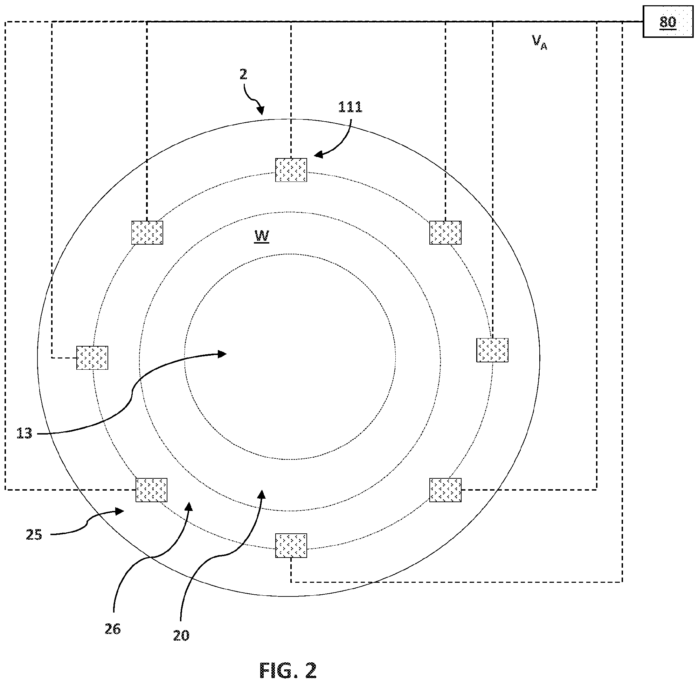

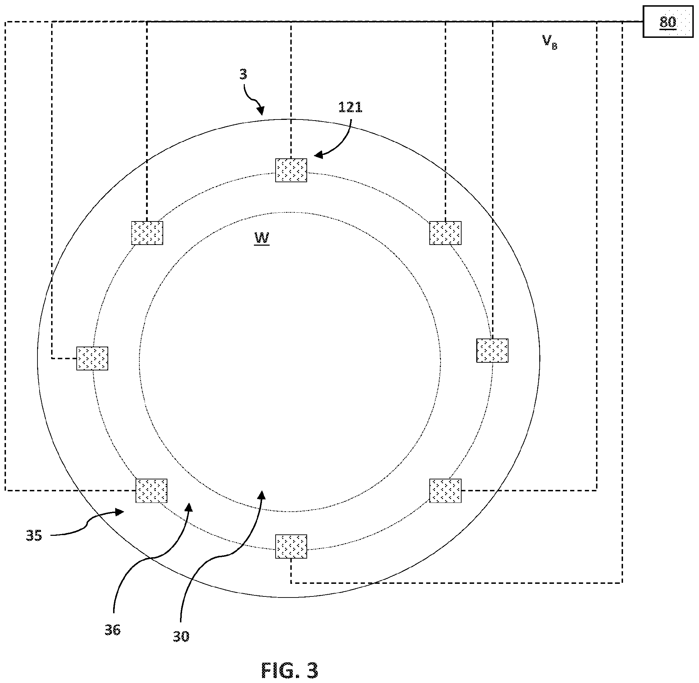

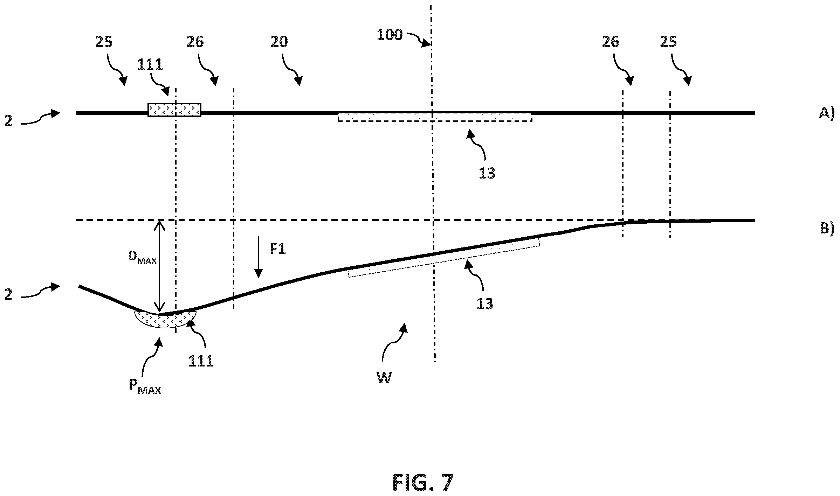

With reference to Fig. 7 (where a portion of the lens structure 1 is shown in a further simplified form with respect to Figs. 1-5, 6A-6B), activation of each of the actuators 111 by means of a corresponding actuation voltage $V_A$ causes a corresponding deformation of the layer 2 (Fig. 7 - case B), with respect to a condition at rest (Fig. 7 - case A), so that the position of the point $P1_{MAX}$ of maximum deformation $D1_{MAX}$ is outside the first central portion 20, i.e. outside the optical aperture W, at a portion of the layer 2 different from the first central portion 20, for example the first outer portion 25 or the first intermediate portion 26.

In practice, each of the first actuators 111 deforms the layer 2 so that the surfaces 21-22 have an absolute maximum or absolute minimum point outside the optical aperture W and a substantially monotonic trend at the optical aperture W.

The total deformation to which the layer 2 is subjected corresponds substantially to the combination of the deformations induced by each piezoelectric actuator 111.

By appropriately modulating the actuation voltages $V_A$, supplied to each of the actuators 111, it is possible to deform the first central portion 20 of the layer 2 (i.e. the portion of layer through which the light beam L passes) in a controlled manner, in particular according to a profile that has a monotonic trend within the optical aperture W.

The first actuators 111 are therefore capable of ensuring effective control of the deformation of the layer 2 at the edges of the optical aperture W.

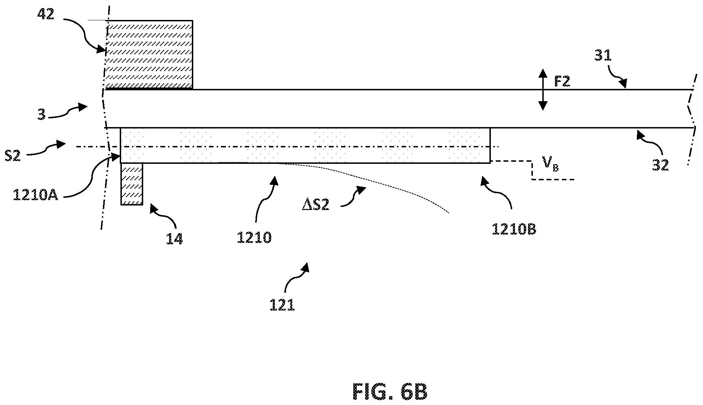

According to the invention, each of the actuators 121 comprises at least a second active portion 1210 integrally connected with the layer 3 (Fig. 6B).

The active portion 1210 is reversibly deformable in response to a corresponding second applied actuation voltage $V_B$.

Preferably, the active portion 1210 is directly in contact with the surface 31 or 32 of the layer 3 so as to form a structure of bimorph type.

When an actuation voltage $V_B$ is applied, the active portion 1210 undergoes a reversible structural deformation $\Delta S2$ that extends along a preferential deformation direction S2, substantially parallel to the surface 31 or 32 of the layer 3.

As the active portion 1210 is integrally connected to the layer 3, this causes the application of a force F2 (in particular of a bending moment) on the layer 3, which thus in turn undergoes a deformation.

Along the preferential deformation direction S2, the active portion 1210 advantageously comprises the ends 1210A, 1210B.

According to the invention, the lens structure 1 comprises at least a first rigid structure 14, 42 integrally connected to the layer 3 and positioned outside the second central portion 30. Preferably, the actuators 121 are permanently constrained to the rigid structure 14, 42.

In particular, the active portion 1210 is integrally connected to the rigid structure 14, 42, preferably in proximity of one of the aforesaid ends (for example the end 1210A in Fig. 6B). In this way, the active portion 1210 is free to deform only at the end that is not constrained (for example the end 1210B in Fig. 6B).

For example, it can bend like a cantilever beam.

The solution illustrated above is particularly advantageous, given that the actuators 121, even if positioned at a portion of the layer 3 different from the first central portion 30, are capable of deforming this latter according to a profile having a trend with at least an absolute maximum and minimum.

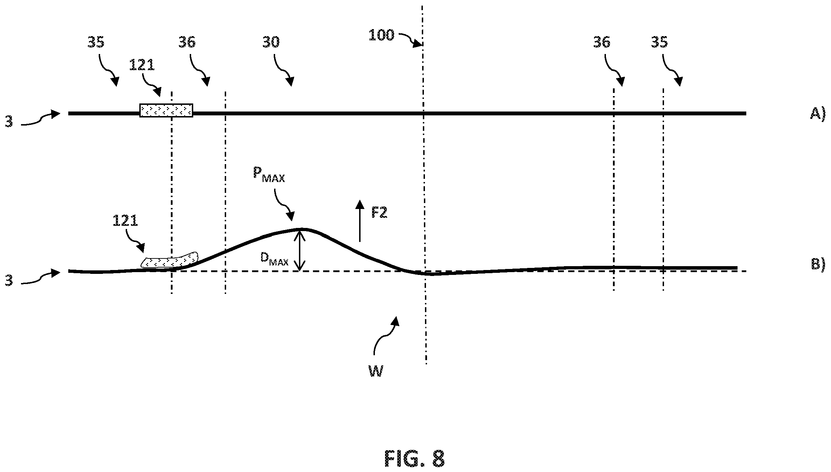

With reference to Fig. 8 (where a portion of the lens structure 1 is shown in a further simplified form with respect to Figs. 1-5, 6A-6B), activation of each of the actuators 121 by means of a corresponding actuation voltage $V_B$ causes a corresponding deformation of the layer 3 (Fig. 8 - case B), with respect to a condition at rest (Fig. 8 - case A), so that the position of the point $P2_{MAX}$ of maximum deformation $D2_{MAX}$ of this latter is at the second central portion 30, i.e. within the optical aperture W.

In practice, each of the first actuators 121 deforms the layer 3 so that the surfaces 31-32 thereof have an absolute maximum or absolute minimum point within the optical aperture W. The total deformation to which the layer 3 is subjected substantially corresponds to the combination of the deformations induce by each piezoelectric actuator 121.

By appropriately modulating the actuation voltages $V_B$, supplied to each of the actuators 121, it is possible to deform the second central portion 30 of the layer 3 (i.e. the portion of layer through which the light beam L passes) in a controlled manner, in particular according to a profile having absolute maximum or minimum points within the optical aperture W.

The second actuators 121 are therefore capable of ensuring effective control of the deformation of the layer 3 within the optical aperture W.

It should be pointed out how the first and second actuators 111-121, even if positioned outside the central portions 20-20 of the layers 2-3, are arranged so that the lens structure 1 emulates, from a functional viewpoint, a lens structure provided with actuators arranged at the central regions 20-30 of the layers 2-3 and of the edges of these regions.

Although positioned outside the central regions 20-30, the first and second actuators 111-121 are capable of controlling the total deformation to which the lens structure is subjected both at the edges of and within the optical aperture W.

In particular, they are capable of deforming the lens structure 1 so as to obtain points of maximum deformation both within and outside the optical aperture W of this lens structure. This enables effective compensation of the aberrations of the wavefront of the light beam L, even if these are of a high order.

Moreover, the effective positioning of the actuators 111-121 outside the optical aperture W enables noteworthy simplification of the layout of these actuators, with considerably advantages in terms of reducing the overall dimensions of the lens structure.

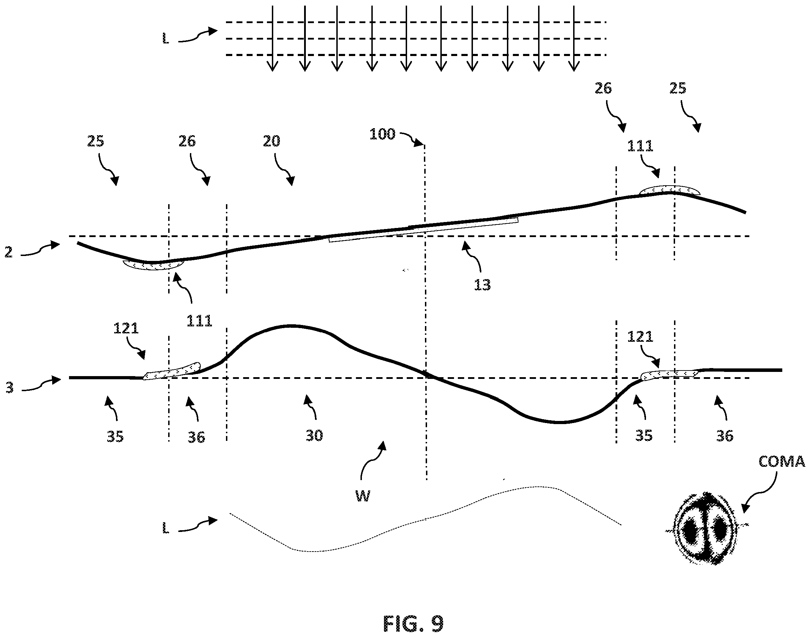

An example of operation of the lens structure 1 is schematically represented in Fig. 9 (where a portion of the lens structure 1 is shown in a further simplified form with respect to Figs. 1-5, 6A-6B).

By appropriately modulating the actuation voltages $V_A$, supplied to each of the actuators 111, the first central portion 20 of the layer 2 is deformed according to a profile having an increasing monotonic trend at the optical aperture W.

By appropriately modulating the actuation voltages $V_B$, supplied to each of the actuators 121, the second central portion 30 of the layer 3 is deformed according to a profile having an absolute maximum and minimum at the optical aperture W.

The total transformation to which the wavefront of the light beam L is subjected, while passing through the optical aperture W, is the combination of the transformations imposed by each of the layers 2-3.

The light beam L can thus be transformed so as to compensate a given aberration of the wavefront thereof, such as tilt, defocus, astigmatism, coma (Fig. 9), spherical aberration, secondary astigmatism, trefoil and tetrafoil.

As illustrated above, an important aspect of the lens structure 1 consists in the fact that:

- the active portion 1110 of the actuators 111 has no permanent constraints with rigid structures different from the layer 2 on which they are positioned;

- the active portion 1210 of the actuators 121 has permanent constraints with at least one rigid structure different from the layer 2 on which they are positioned.

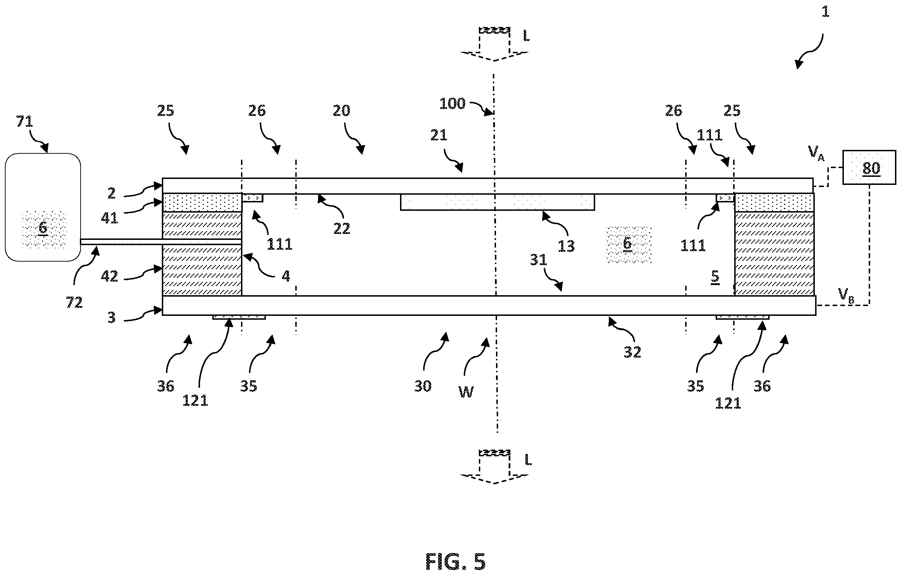

According to some embodiments of the invention (Figs. 1 and 5), the spacer element 4 comprises a second rigid portion 42 integrally connected to the first flexible portion 41 and to the layer 3.

Preferably, the rigid portion 41 is positioned between the flexible portion 41 of the spacer element 4 and the layer 3.

According to some embodiments of the invention, the rigid portion 42 at least partially forms the rigid structure to which the actuators 121 are integrally connected, so as to be permanently constrained thereto.

The active portion 1210 of the actuators 121 can be integrally connected to the layer 3 (preferably in proximity of the end 1210A) at the second outer portion 35, in turn integrally connected with the rigid portion 42.

Alternatively, the active portion 1210 of the actuators 121 (preferably in proximity of the end 1210A) can be integrally connected directly with the rigid portion 42, in turn integrally connected with the layer 3.

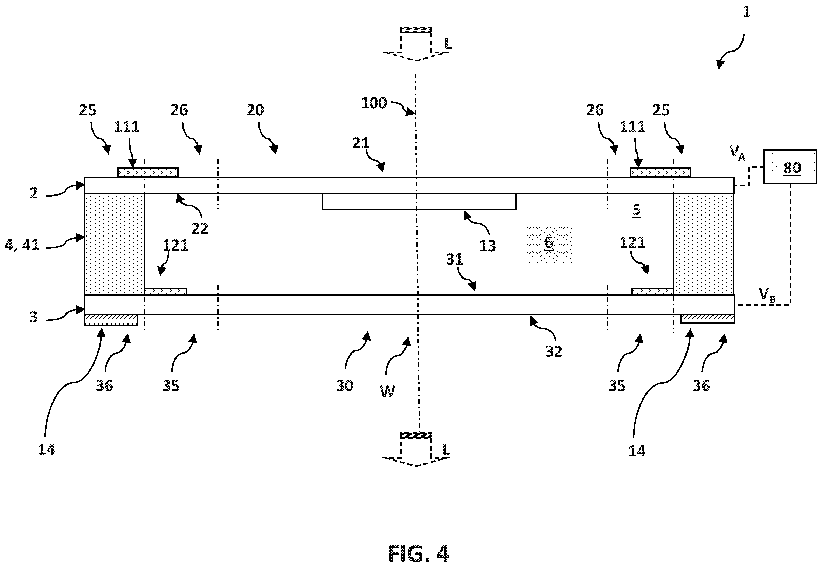

According to some embodiments of the invention (Fig. 4), the lens structure 1 comprises a first stiffening element 14 integrally connected to the layer 3 outside the second central portion 30, i.e. at a portion different from the second central portion 30, for example the second outer portion 35 or the second intermediate portion 36.

According to these embodiments of the invention, the stiffening element 14 at least partially forms the rigid structure to which the actuators 121 are integrally connected, so as to be permanently constrained thereto.

The active portion 1210 of the actuators 121 can be integrally connected to the layer 3 (preferably in proximity of the end 1210A) at the second outer portion 35, in turn integrally connected with the stiffening element 14.

Alternatively, the active portion 1210 of the actuators 121 (preferably in proximity of the end 1210A) can be integrally connected directly with the stiffening element 14, in turn integrally connected with the layer 3.

Preferably, the stiffening element 14 is positioned at the surface 32 of the layer 3.

When the stiffening element 14 is present, the spacer element 4 could be produced so as to be, in its entirety, structurally flexible. In other words, the spacer element 41 could comprise only the flexible portion 41, as shown in the variant of Fig. 4.

According to other variants (not shown), the spacer element 4 could comprise the portions 41-42, described above, even if the stiffening element 14 is present.

Preferably, the lens structure 1 comprises a second stiffening element 13 integrally connected to the first layer 2 at the first central portion 20.

Preferably, the stiffening element 13 is integrally connected to the first inner surface 22 of the layer 2.

Advantageously, the stiffening element 13 is transparent to the light beam L so as not to obstruct the passage of light radiation L through the lens structure 1.

Preferably, the stiffening element 13 has a homogeneous refractive index with respect to that of the transparent liquid 6 and of the layers 2-3.

The use of the stiffening element 13, integrally connected to the layer 2, enables deformation of the layer 2 according to more complex profiles than those already illustrated, for example profiles having a "saddle-like" trend at the first central portion 20.

This enables transformation of the wavefront of the light beam L so as to effectively compensate aberrations of a high order, in particular spherical aberration.

According to some embodiments of the invention (Figs. 1-4), the inner chamber 5 is hermetically closed so that the volume of the transparent liquid 6 is maintained constant when the layers 2-3 undergo a deformation.

In these embodiments of the invention, it is possible to obtain relatively wide deformations of the central portion 20 of the layer 2, without giving rise to phenomena of structural collapse.

According to other embodiments of the invention (Fig. 5), the lens structure comprises a control circuit connected to the inner chamber 5 to enable a variation of the volume of the transparent liquid 6, when the layers 2-3 undergo a deformation.

Preferably, the aforesaid control circuit comprises a reservoir 71, within which the liquid 6 is free to expand, and a connection element 72 passing through the thickness of the spacer element 4 and/or of the layer 2 or 3.

The control circuit 71, 72 is arranged so that the liquid 6 is free to flow from/into the inner chamber 5 as a function of the difference in pressure existing between this latter and the reservoir 71.

In these embodiments of the invention, when the layers 2-3 are deformed so that the pressure of the liquid 6 in the chamber 5 exceeds the hydrostatic pressure in the reservoir 71, the liquid 6 flows freely in the reservoir 71, until reaching a new point of equilibrium between the aforesaid pressures.

When the layers 2-3 are deformed so that the pressure of the liquid 6 in the chamber 5 is below the hydrostatic pressure in the reservoir 71, the liquid 6 flows freely in the chamber 5. The volume of the liquid 6 in the inner chamber 5 can therefore vary as a function of the deformations to which the layers 2-3 are subject.

In these embodiments of the invention it is possible to obtain deformations of the layers 2-3 with relatively high frequencies. The frequencies obtainable are substantially analogous to those of lens structures in air.

The lens structure 1 may be subject to further modifications or variants, all falling within the scope of the present invention.

For example, the mutual positioning of the layers 2-3 could be inverted with respect to the embodiments illustrated in the aforesaid figures.

The actuators 111-121 can be positioned at the surfaces 22-32 of the layers 2-3, respectively. However, variants in which the actuators 111 are positioned at both of the surfaces 21-22 of the layer 2 and the actuators 121 are positioned at both of the surfaces 31-32 of the layer 3 are also possible.

Moreover, the path of the light beam L through the lens structure 1 can be inverted with respect to what is shown in the aforesaid figures, in which, by way of example, the light beam L is shown as entering/exiting from the lens structure 1 at the layers 2 and 3, respectively. The stiffening element 13 could be integrally connected to the first outer surface 21 of the layer 2.

The stiffening element 14 could be integrally connected to the second inner surface 31 or to the second outer surface 32 of the layer 3.

In practice, it has been seen how with the lens structure 1 according to the invention it is possible to solve the problems of the prior art described, achieving the stated objects.

The lens structure 1 enables aberrations of a relatively high order (greater than the second order) of a light beam passing through it to be corrected relatively easily.

The lens structure 1 also enables aberrations of a light beam with a high operational dynamic range, both in amplitude and in frequency, to be corrected relatively easily.

The lens structure 1 has a relatively simple structure, easy to miniaturize with known manufacturing processes.

It can therefore be incorporated in an adaptive optics device or optical system, without significantly complicating the overall structure thereof.

The lens structure 1 can be easily produced with known industrial processes, at limited costs.

**Claims**

1. A deformable lens structure (1) for adaptive optics devices, comprising:

   - an optical axis (100) along which, in the use of said deformable lens structure, a light beam (L) is transmitted;
   - a first rigid layer (2) having a first outer surface (21) and a first inner surface (22), opposite said first outer surface (21);
   - a second rigid layer (3) positioned spaced with respect to said first layer (2) and having a second inner surface (31), facing said first inner surface (22), and a second outer surface (32), opposite said second inner surface (22);
   - a spacer element (4) positioned between said first inner surface (22) and said second inner surface (31) and integrally connected to said first and second layer (2, 3), said spacer element (4) being located perimetrally with respect to said first and second layer (2, 3) and defining, at least partially, a lateral wall of said deformable lens structure (1), said spacer element (4) comprising a first flexible portion (41) at which said spacer element (4) is integrally connected with said first layer (2);

   wherein said first layer (2) comprises:

      - a first central portion (20) transparent to said light beam (L) and defining an optical aperture (W) of said deformable lens structure (1), said first central portion (20) being formed by a section of said first layer (2) centred with respect to said optical axis (100) and passing through the thickness of said first layer (2);
      - a first outer portion (25) at which said first layer (2) is integrally connected with said spacer element (4), said first outer portion (25) being formed by a section of said first layer (2) centred with respect to said optical axis (W), positioned externally with respect to said first central portion (20) and passing through the thickness of said first layer (2);
      - a first intermediate portion (26) formed by a section of said first layer (2) centred with respect to said optical axis (W), positioned between said first central portion (20) and said first outer portion (25) and passing through the thickness of said first layer (2);

   wherein said second layer (3) comprises:

      - a second central portion (30) transparent to said light beam (L) and defining the optical aperture (W) of said deformable lens structure (1), said second central portion (30) being formed by a section of said second layer (3) centred with respect to said optical axis (100) and passing through the thickness of said second layer (3);

- a second outer portion (35) at which said second layer (3) is integrally connected with said spacer element (4), said second outer portion (35) being formed by a section of said second layer (3) centred with respect to said optical axis (W), positioned externally with respect to said second central portion (30) and passing through the thickness of said second layer (3);

- a second intermediate portion (36) formed by a section of said second layer (3) centred with respect to said optical axis (W), positioned between said second central portion (30) and said second outer portion (35) and passing through the thickness of said second layer (3);

said deformable lens structure (1) further comprising:

- an inner chamber (5) at least partially defined by said first and second layer (2, 3) and by said spacer element (4), said inner chamber containing a liquid (6), transparent to said light beam (L) and in contact with said first and second layer (2, 3);

- first actuators (111) adapted to cause a reversible deformation of said first layer (2), wherein said first actuators (111) are integrally connected to said first layer (2) and are positioned outside said first central portion (20), thereby being outside the optical aperture (W) of said deformable lens structure (1) defined by said first central portion (20), wherein said first actuators (111) comprise a first active portion (1110) integrally connected with said first layer (2) and reversibly deformable, along a direction substantially parallel to said first layer (2), in response to a first applied actuation voltage ($V_A$), wherein, when said first actuation voltage ($V_A$) is applied, said first active portion (1110) undergoes a reversible structural deformation ($\Delta S1$) that extends along a preferential deformation direction (S1), substantially parallel to said first layer (2); said first active portion (1110) comprising ends (1110A, 1110B) along said preferential deformation direction (S1);

- second actuators (121) adapted to cause a reversible deformation of said second layer (3), wherein said second actuators (121) are integrally connected to said second layer (3) and are positioned outside said second central portion (30), thereby being outside optical aperture (W) of said deformable lens structure (1) defined by said second central portion (30), wherein said second actuators (121) comprise a second active portion (1210) integrally connected with said second layer (3) and reversibly deformable, along a direction substantially parallel to said second layer (3), in response to a second applied actuation voltage ($V_B$);

- at least one rigid structure (14, 42) integrally connected to said second layer (3) and positioned outside said second central portion (30), the active portion of said second actuators (121) being permanently constrained to said rigid structure (14, 42);

said deformable lens structure (1) being **characterized in that** said first actuators (111) are free from fixed constraints with rigid structures, given that said first layer (2) is integrally connected to the flexible portion (41) of said spacer element (4), such that the first active portion (1110) of said first actuators (111) is free to deform at both ends (1110A, 1110B).

2. The deformable lens structure (1), according to claim 1, **characterized in that**:

- each of said first actuators (111) causes, when activated by a corresponding first actuation voltage ($V_A$), a corresponding deformation of said first layer (2) with a point ($P1_{MAX}$) of maximum deformation ($D1_{MAX}$) positioned outside said first central portion (20);

- each of said second actuators (121) causes, when activated by a corresponding second actuation voltage ($V_B$), a corresponding deformation of said second layer (3) with a point ($P2_{MAX}$) of maximum deformation ($D2_{MAX}$) at said second central portion (30).

3. The deformable lens structure (1) according to one or more of the preceding claims, **characterized in that** said at least one rigid structure comprises a second rigid portion (42) of said spacer element (4), integrally connected to said second layer (3).

4. The deformable lens structure (1) according to one or more of the preceding claims, **characterized in that** said at least one rigid structure comprises a first stiffening element (14) integrally connected to said second layer (3).

5. The deformable lens structure (1) according to one or more of the preceding claims, **characterized in that** it comprises a second stiffening element (13) integrally connected to said first layer (2) at said first central portion (20), said second stiffening element (13) being transparent to said light beam (L).

6. The deformable lens structure (1) according to one or more of the preceding claims, **characterized in that** said first and second actuators (111, 121) are of piezoelectric, electrostrictive or bimetallic type.

7. The deformable lens structure (1) according to one or more of the preceding claims, **characterized in that** it comprises at least eight first actuators (11) and eight second actuators (121).

8. The deformable lens structure (1) according to one or more of the preceding claims, **characterized in that** said inner chamber (5) is closed toward the outside so as to maintain the volume of said liquid (6) constant when said first and second layer (2, 3) are deformed.

9. The deformable lens structure (1) according to one or more of claims 1 to 7, **characterized in that** it comprises a control circuit (71, 72) connected to said inner chamber to enable a variation of the volume of said liquid (6) when said first and second layer (2, 3) are deformed.

10. An adaptive optics device, **characterized in that** it comprises a deformable lens structure (1) according to one or more of the preceding claims.


**Patentansprüche**

1. Verformbare Linsenstruktur (1) für adaptive optische Vorrichtungen, umfassend:

 - eine optische Achse (100), entlang der beim Einsatz der genannten verformbaren Linsenstruktur ein Lichtstrahl (L) übertragen wird;
 - eine erste steife Schicht (2), die eine erste Außenfläche (21) und eine der genannten ersten Außenfläche (21) gegenüberliegende erste Innenfläche (22) aufweist;
 - eine zweite steife Schicht (3), die im Verhältnis zu der genannten ersten Schicht (2) im Abstand positioniert ist und eine der genannten ersten Innenfläche (22) zugewandte zweite Innenfläche (31) und eine der genannten zweiten Innenfläche (22) gegenüberliegende zweite Außenfläche (32) aufweist;
 - ein Abstandselement (4), das zwischen der genannten ersten Innenfläche (22) und der genannten zweiten Innenfläche (31) positioniert und vollständig mit der genannten ersten und zweiten Schicht (2, 3) verbunden ist, wobei das genannte Abstandselement (4) im Verhältnis zu der genannten ersten und zweiten Schicht (2, 3) umlaufend platziert ist und, mindestens teilweise, eine Seitenwand der genannten verformbaren Linsenstruktur (1) definiert, wobei das genannte Abstandselement (4) einen ersten flexiblen Abschnitt (41) umfasst, an dem das genannte Abstandselement (4) vollständig mit der genannten ersten Schicht (2) verbunden ist; wobei die genannte erste Schicht (2) Folgendes umfasst:

 - einen ersten mittleren Abschnitt (20), der für den genannten Lichtstrahl (L) transparent ist und eine optische Öffnung (W) der genannten verformbaren Linsenstruktur (1) definiert, wobei der genannte erste mittlere Abschnitt (20) aus einem Bereich der genannten ersten Schicht (2) gebildet wird, der im Verhältnis zu der genannten optischen Achse (100) zentriert ist und durch die Stärke der genannten ersten Schicht (2) verläuft;
 - einen ersten äußeren Abschnitt (25), an dem die genannte erste Schicht (2) vollständig mit dem genannten Abstandselement (4) verbunden ist, wobei der genannte äußere Abschnitt (25) durch einen Bereich der genannten ersten Schicht (2) gebildet wird, der im Verhältnis zu der genannten optischen Achse (W) zentriert ist und im Verhältnis zu dem genannten ersten mittleren Abschnitt (20) außen positioniert ist und durch die Stärke der genannten ersten Schicht (2) verläuft;
 - einen ersten Zwischenabschnitt (26), der durch einen Bereich der genannten ersten Schicht (2) gebildet wird, der im Verhältnis zu der genannten optischen Achse (W) zentriert ist, der zwischen dem genannten ersten mittleren Abschnitt (20) und dem genannten äußeren Abschnitt (25) positioniert ist und durch die Stärke der genannten ersten Schicht (2) verläuft;

wobei die genannte zweite Schicht (3) Folgendes umfasst:

 - einen zweiten mittleren Abschnitt (30), der für den genannten Lichtstrahl (L) transparent ist und eine optische Öffnung (W) der verformbaren Linsenstruktur (1) definiert, wobei der genannte zweite mittlere Abschnitt (30) aus einem Bereich der genannten zweiten Schicht (3) gebildet wird, der im Verhältnis zu der genannten optischen Achse (100) zentriert ist und durch die Stärke der genannten zweiten Schicht (3) verläuft;
 - einen zweiten äußeren Abschnitt (35), an dem die genannte zweite Schicht (3) vollständig mit dem genannten Abstandselement (4) verbunden ist, wobei der genannte zweite äußere Abschnitt (35) aus einem Bereich der genannten zweiten Schicht (3) gebildet wird, der im Verhältnis zu der genannten optischen Achse (W) zentriert ist, der im Verhältnis zu dem genannten zweiten mittleren Abschnitt (30) außen positioniert ist und durch die Stärke der genannten zweiten Schicht (3) verläuft;

- einen zweiten Zwischenabschnitt (36), der aus einem Bereich der genannten zweiten Schicht (3) gebildet wird, der im Verhältnis zu der genannten optischen Achse (W) zentriert ist, der zwischen dem genannten zweiten mittleren Abschnitt (30) und dem genannten zweiten äußeren Abschnitt (35) positioniert ist und durch die Stärke der genannten zweiten Schicht (3) verläuft;

wobei die verformbare Linsenstruktur (1) außerdem Folgendes umfasst:

- eine Innenkammer (5), die zumindest teilweise durch die genannte erste und zweite Schicht (2, 3) und durch das genannte Abstandselement (4) definiert wird, wobei die genannte Innenkammer eine Flüssigkeit (6) enthält, die für den genannten Lichtstrahl (L) durchsichtig ist und sich in Kontakt mit der genannten ersten und zweiten Schicht (2, 3) befindet;

- erste Stellglieder (111), die geeignet sind, eine umkehrbare Verformung der genannten ersten Schicht (2) herbeizuführen, wobei die genannten ersten Stellglieder (111) vollständig mit der genannten ersten Schicht (2) verbunden und außerhalb des genannten ersten mittleren Abschnitts (20) positioniert sind, wodurch sie sich außerhalb der genannten optischen Öffnung (W) der genannten verformbaren Linsenstruktur (1) befinden, die von dem genannten ersten mittleren Abschnitt (20) definiert wird, wobei die genannten ersten Stellglieder (111) einen ersten aktiven Abschnitt (1110) umfassen, der vollständig mit der genannten ersten Schicht (2) verbunden und entlang einer im Wesentlichen zu der genannten ersten Schicht (2) parallelen Richtung als Reaktion auf eine erste angelegte Ansteuerspannung ($V_A$) umkehrbar verformbar ist, wobei, wenn die genannte erste Ansteuerspannung ($V_A$) angelegt wird, der genannte erste aktive Abschnitt (1110) einer umkehrbaren strukturellen Verformung ($\Delta$S1) unterliegt, die entlang einer bevorzugten Verformungsrichtung (S1) im Wesentlichen parallel zu der genannten ersten Schicht (2) verläuft; wobei der genannte erste aktive Abschnitt (1110) Enden (1110A, 1110B) entlang der genannten bevorzugten Verformungsrichtung (S1) umfasst;

- zweite Stellglieder (121), die geeignet sind, eine umkehrbare Verformung der genannten zweiten Schicht (3) herbeizuführen, wobei die genannten zweiten Stellglieder (121) vollständig mit der genannten zweiten Schicht (3) verbunden und außerhalb des genannten zweiten mittleren Abschnitts (30) positioniert sind, wodurch sie sich außerhalb der optischen Öffnung (W) der genannten verformbaren Linsenstruktur (1) befinden, die durch den genannten zweiten mittleren Abschnitt (30) definiert wird, wobei die genannten zweiten Stellglieder (121) einen zweiten aktiven Abschnitt (1210) umfassen, der vollständig mit der genannten zweiten Schicht (3) verbunden und entlang einer im Wesentlichen zu der genannten zweiten Schicht (3) parallelen Richtung als Reaktion auf eine zweite angelegte Ansteuerspannung ($V_B$) umkehrbar verformbar ist;

- mindestens eine steife Struktur (14, 42), die vollständig mit der genannten zweiten Schicht (3) verbunden und außerhalb des genannten zweiten mittleren Abschnitts (30) positioniert ist, wobei der aktive Abschnitt der genannten zweiten Stellglieder (121) ununterbrochen an der genannten steifen Struktur (14, 42) gehalten wird;

wobei die genannte verformbare Linsenstruktur (1) **dadurch gekennzeichnet ist, dass** die genannten ersten Stellglieder (111) von festen Halterungen mit steifen Strukturen frei sind, da die genannte erste Schicht (2) vollständig mit dem flexiblen Abschnitt (41) des genannten Abstandselements (4) verbunden ist, so dass der erste aktive Abschnitt (1110) der genannten ersten Stellglieder (111) sich frei an beiden Enden (1110A, 1110B) verformen kann.

2.  Verformbare Linsenstruktur (1) nach Anspruch 1, **dadurch gekennzeichnet, dass**:

- jedes der genannten ersten Stellglieder (111) bei Aktivierung durch eine entsprechende erste Ansteuerspannung ($V_A$) eine entsprechende Verformung der genannten ersten Schicht (2) mit einem Punkt ($P1_{MAX}$) der maximalen Verformung ($D1_{MAX}$) außerhalb des genannten ersten mittleren Abschnitts (20) herbeiführt;
- jedes der genannten zweiten Stellglieder (121) bei Aktivierung durch eine entsprechende zweite Ansteuerspannung ($V_B$) eine entsprechende Verformung der genannten zweiten Schicht (3) mit einem Punkt ($P2_{MAX}$) der maximalen Verformung ($D2_{MAX}$) außerhalb des genannten zweiten mittleren Abschnitts (30) herbeiführt.

3. Verformbare Linsenstruktur (1) nach einem oder mehreren der vorangegangenen Ansprüche, **dadurch gekennzeichnet, dass** die genannte mindestens eine steife Struktur einen zweiten steifen Abschnitt (42) des genannten Abstandselements (4) umfasst, der vollständig mit der genannten zweiten Schicht (3) verbunden ist.

4. Verformbare Linsenstruktur (1) nach einem oder mehreren der vorangegangenen Ansprüche, **dadurch gekennzeichnet, dass** die genannte mindestens eine steife Struktur einen erstes Versteifungselement (14) umfasst, das vollständig mit der genannten zweiten Schicht (3) verbunden ist.

5. Verformbare Linsenstruktur (1) nach einem oder mehreren der vorangegangenen Ansprüche, **dadurch gekennzeichnet, dass** sie ein zweites Versteifungselement (13) umfasst, das an dem genannten ersten mittleren Abschnitt (20) vollständig mit der genannten ersten Schicht (2) verbunden ist, wobei das genannte zweite Versteifungselement (13) für den genannten Lichtstrahl (L) durchsichtig ist.

6. Verformbare Linsenstruktur (1) nach einem oder mehreren der vorangegangenen Ansprüche, **dadurch gekennzeichnet, dass** das genannte erste und zweite Stellglied (111, 121) piezoelektrischen, elektrostriktiven oder bimetallischen Typs ist.

7. Verformbare Linsenstruktur (1) nach einem oder mehreren der vorangegangenen Ansprüche, **dadurch gekennzeichnet, dass** sie mindestens acht erste Stellglieder (11) und achte zweite Stellglieder (121) umfasst.

8. Verformbare Linsenstruktur (1) nach einem oder mehreren der vorangegangenen Ansprüche, **dadurch gekennzeichnet, dass** die genannte Innenkammer (5) zur Außenseite hin geschlossen ist, um das Volumen der genannten Flüssigkeit (6) konstant zu halten, wenn die genannte erste und zweite Schicht (2, 3) verformt werden.

9. Verformbare Linsenstruktur (1) nach einem oder mehreren der Ansprüche von 1 bis 7, **dadurch gekennzeichnet, dass** sie einen an die Innenkammer angeschlossenen Steuerkreis (71, 72) umfasst, um die Änderung des Volumens der genannten Flüssigkeit (6) zu ermöglichen, wenn die genannte erste und zweite Schicht (2, 3) verformt werden.

10. Adaptive optische Vorrichtung, **dadurch gekennzeichnet, dass** sie eine verformbare Linsenstruktur (1) nach einem oder mehreren der vorangegangenen Ansprüche umfasst.

**Revendications**

1. Structure de lentille déformable (1) pour des dispositifs d'optique adaptative, comprenant:

   - un axe optique (100) le long duquel, lors de l'utilisation de ladite structure de lentille déformable, un faisceau de lumière (L) est transmis;
   - une première couche (2) ayant une première surface externe (21) et une première surface interne (22), opposée à ladite première surface externe (21);
   - une seconde couche rigide (3) positionnée de manière espacée par rapport à ladite première couche (2) et ayant une seconde surface interne (31), orientée vers ladite première surface interne (22), et une seconde surface externe (32), opposée à ladite seconde surface interne (22);
   - un élément d'espacement (4) positionné entre ladite première surface interne (22) et ladite seconde surface interne (31) et raccordé d'un seul tenant auxdites première et seconde couches (2, 3), ledit élément d'espacement (4) étant situé périphériquement par rapport auxdites première et seconde couches (2, 3) et définissant, au moins partiellement, une paroi latérale de ladite structure de lentille déformable (1), ledit élément d'espacement (4) comprenant une première partie (41) au niveau de laquelle ledit élément d'espacement (4) est raccordé d'un seul tenant à ladite première couche (2);
   dans laquelle ladite première couche (2) comprend:

      - une première partie centrale (20) transparente audit faisceau de lumière (L) et définissant une ouverture optique (W) de ladite structure de lentille déformable (1), ladite première partie centrale (20) étant formée par une section de ladite première couche (2) centrée par rapport audit axe optique (100) et passant à travers l'épaisseur de ladite première couche (2);
      - une première partie externe (25) au niveau de laquelle ladite première couche (2) est raccordée d'un seul tenant audit élément d'espacement (4), ladite première partie externe (25) étant formée par une section de ladite première couche (2) centrée par rapport audit axe optique (W), positionnée extérieurement par rapport à ladite première partie centrale (20) et passant à travers l'épaisseur de ladite première couche (2);
- une première partie intermédiaire (26) formée par une section de ladite première couche (2) centrée par rapport audit axe optique (W), positionnée entre ladite première partie centrale (20) et ladite première partie externe (25) et passant à travers l'épaisseur de ladite première couche (2);

dans laquelle ladite seconde couche (3) comprend:

- une seconde partie centrale (30) transparente audit faisceau de lumière (L) et définissant l'ouverture optique (W) de ladite structure de lentille déformable (1), ladite seconde partie centrale (30) étant formée par une section de ladite seconde couche (3) centrée par rapport audit axe optique (100) et passant à travers l'épaisseur de ladite seconde couche (3);
- une seconde partie externe (35) au niveau de laquelle ladite seconde couche (3) est raccordée d'un seul tenant audit élément d'espacement (4), ladite seconde partie externe (35) étant formée par une section de ladite seconde couche (3) centrée par rapport audit axe optique (W), positionnée extérieurement par rapport à ladite seconde partie centrale (30) et passant à travers l'épaisseur de ladite seconde couche (3);
- une seconde partie intermédiaire (36) formée par une section de ladite seconde couche (3) centrée par rapport audit axe optique (W), positionnée entre ladite seconde partie centrale (30) et ladite seconde partie externe (35) et passant à travers l'épaisseur de ladite seconde couche (3);

ladite structure de lentille déformable (1) comprenant en outre:

- une chambre interne (5) au moins partiellement définie par lesdites première et seconde couches (2, 3) et par ledit élément d'espacement (4), ladite chambre interne contenant un liquide (6), transparent audit faisceau de lumière (L) et en contact avec lesdites première et seconde couches (2, 3);
- des premiers actionneurs (111) aptes à provoquer une déformation réversible de ladite première couche (2), dans laquelle lesdits premiers actionneurs (111) sont raccordés d'un seul tenant à ladite première couche (2) et sont positionnés à l'extérieur de ladite première partie centrale (20), se trouvant ainsi à l'extérieur de l'ouverture optique (W) de ladite structure de lentille déformable (1) définie par ladite première partie centrale (20), dans laquelle lesdits premiers actionneurs (111) comprennent une première partie active (1110) raccordée d'un seul tenant à ladite première couche (2) et déformable réversiblement, le long d'une direction sensiblement parallèle à ladite première couche (2), en réponse à une première tension d'actionnement appliquée ($V_A$), dans laquelle, lorsque ladite première tension d'actionnement ($V_A$) est appliquée, ladite première partie active (1110) est soumise à une déformation structurelle réversible (($\Delta S1$) qui s'étend le long d'une direction de déformation préférentielle (S1), sensiblement parallèle à ladite première couche (2) ; ladite première partie active (1110) comprenant des extrémités (1110A, 1110B) le long de ladite direction de déformation préférentielle (S1);
- des seconds actionneurs (121) aptes à provoquer une déformation réversible de ladite seconde couche (3), dans laquelle lesdits seconds actionneurs (121) sont raccordés d'un seul tenant à ladite seconde couche (3) et sont positionnés à l'extérieur de ladite seconde partie centrale (30), se trouvant ainsi à l'extérieur de l'ouverture optique (W) de ladite structure de lentille déformable (1) définie par ladite seconde partie centrale (30), dans laquelle lesdits seconds actionneurs (121) comprennent une seconde partie active (1210) raccordée d'un seul tenant à ladite seconde couche (3) et déformable réversiblement, le long d'une direction sensiblement parallèle à ladite seconde couche (3), en réponse à une seconde tension d'actionnement appliquée ($V_B$);
- au moins une structure rigide (14, 42) raccordée d'un seul tenant à ladite seconde couche (3) et positionnée à l'extérieur de ladite seconde partie centrale (30), la partie active desdits seconds actionneurs (121) étant liée de manière fixe à ladite structure rigide (14, 42);

ladite structure de lentille déformable (1) étant **caractérisée en ce que** lesdits premiers actionneurs (111) sont libres de contraintes fixées à des structures rigides, étant donné que ladite première couche (2) est raccordée d'un seul tenant à la partie flexible (41) dudit élément d'espacement (4), de sorte que la première partie active (1110) desdits premiers actionneurs (111) soit libre afin de se déformer au niveau des deux extrémités (1110A, 1110B).

**2.** Structure de lentille déformable (1), selon la revendication 1, **caractérisée en ce que**:

- chacun desdits premiers actionneurs (111) provoque, lorsqu'ils sont activés par une première tension d'actionnement correspondante ($V_A$), une déformation correspondante de ladite première couche (2) avec un pic ($P1_{MAX}$) de déformation maximal ($D1_{MAX}$) positionnée à l'extérieur de ladite première partie centrale (20);
- chacun desdits seconds actionneurs (121) provoque, lorsqu'ils sont activés par une seconde tension d'actionnement correspondante ($V_B$), une déformation correspondante de ladite seconde couche (3) avec un pic ($P2_{MAX}$) de déformation maximal ($D2_{MAX}$) au niveau de ladite seconde partie centrale (30).

**3.** Structure de lentille déformable (1) selon une ou plusieurs des revendications précédentes, **caractérisée en ce que** ladite au moins une structure rigide comprend une seconde partie rigide (42) dudit élément d'espacement (4), raccordée d'un seul tenant à ladite seconde couche (3).

**4.** Structure de lentille déformable (1) selon une ou plusieurs des revendications précédentes, **caractérisée en ce que** ladite au moins une structure rigide comprend un premier élément raidisseur (14) raccordé d'un seul tenant à ladite seconde couche (3).

**5.** Structure de lentille déformable (1) selon une ou plusieurs des revendications précédentes, **caractérisée en ce qu'**elle comprend un second élément raidisseur (13) raccordé d'un seul tenant à ladite première couche (2) au niveau de ladite première partie centrale (20), ledit second élément raidisseur (13) étant transparent audit faisceau de lumière (L).

**6.** Structure de lentille déformable (1) selon une ou plusieurs des revendications précédentes, **caractérisée en ce que** lesdits premiers et seconds actionneurs (111, 121) sont de type piézoélectrique, électrostrictif ou bimétallique.

**7.** Structure de lentille déformable (1) selon une ou plusieurs des revendications précédentes, **caractérisée en ce qu'**elle comprend au moins huit premiers actionneurs (11) et huit seconds actionneurs (121).

**8.** Structure de lentille déformable (1) selon une ou plusieurs des revendications précédentes, **caractérisée en ce que** ladite chambre interne (5) est fermée vers l'extérieur de manière à maintenir constant le volume dudit liquide (6) lorsque lesdites première et seconde couches (2, 3) sont déformées.

**9.** Structure de lentille déformable (1) selon une ou plusieurs des revendications de 1 à 7, **caractérisée en ce qu'**elle comprend un circuit de commande (71, 72) raccordé à ladite chambre interne pour permettre une variation du volume dudit liquide (6) lorsque lesdites première et seconde couches (2, 3) sont déformées.

**10.** Dispositif d'optique adaptative, **caractérisé en ce qu'**il comprend une structure de lentille déformable (1) selon une ou plusieurs des revendications précédentes.

FIG. 1

FIG. 2

FIG. 3

FIG. 4

FIG. 5

EP 3 100 080 B1

**FIG. 6A**

FIG. 6B

FIG. 7

EP 3 100 080 B1

FIG. 8

EP 3 100 080 B1

FIG. 9